# EUROPÄISCHE PATENTANMELDUNG

(11) **EP 1 050 238 A1**
(43) Veröffentlichungstag der Anmeldung: **08.11.2000**
(21) Anmeldenummer: 99115881.7
(22) Anmeldetag: 12.08.1999
(51) Int. Cl.: A47B 1/00, F16B 12/40, A47B 77/18, A47B 88/00, B65F 1/14

(54) **Anordnung zur Herstellung eines Rahmenbauteils sowie Möbelbauteil umfassend ein solches Rahmenbauteil**

(30) Priorität: 04.05.1999 DE 19920388
(71) Anmelder: Hailo-Werk Rudolf Loh GmbH & Co. KG, D-35708 Haiger-Flammersbach (DE)
(72) Erfinder: Winnemann, Bernd, 35745 Herborn (DE)
(74) Vertreter: Fritz, Edmund Lothar, Dipl.-Chem.

(57) **Zusammenfassung**

Anordnung zur Herstellung eines Rahmenbauteils, insbesondere zur Verwendung im Möbelbau, umfassend wenigstens ein Profilstück sowie stangenartige Bauelemente, wobei wenigstens ein Profilstück (10) in wenigstens einer Aufnahme (11) wenigstens ein stangenartiges Bauelement (12) formschlüssig aufnimmt und Befestigungselemente (13) vorgesehen sind, mittels derer eine Klemmkraft auf das stangenartige Bauelement (12) in der Aufnahme (11) des Profilstücks (10) quer zur Achse des stangenartigen Bauelements (12) erzielbar ist, derart, daß das stangenartige Bauelement (12) im Befestigungszustand in der Aufnahme (11) in Achsrichtung unverschieblich gehalten ist.

## Beschreibung

Die vorliegende Erfindung betrifft eine Anordnung zur Herstellung eines Rahmenbauteils, insbesondere zur Verwendung im Möbelbau, umfassend wenigstens ein Profilstück sowie stangenartige Bauelemente. Die Erfindung betrifft weiterhin ein Möbelbauteil umfassend wenigstens ein Rahmenbauteil mit einer Anordnung der vorgenannten Art.

Rahmenbauteile der eingangs genannten Art werden im Möbelbau zum Beispiel in Schränken, insbesondere Einbauschränken mit nach vorn ausziehbaren Teilen wie zum Beispiel ausziehbaren Schubladeneinheiten, Tablaren oder dergleichen verwendet. Beispielsweise ist ein Anwendungsfall das Rahmenbauteil wie es für Kücheneinbauschränke mit ausziehbaren Teilelementen verwendet wird, in die dann Abfallsammler einhängbar sind. Derartige Einbauschränke können mehrere Abfallsammler aufnehmen, so daß mehrere Behältnisse nebeneinander und/oder hintereinander angeordnet sind, wenn diese zum Beispiel für Abfalltrennsysteme eingesetzt werden. Die einzelnen Abfallbehältnisse können in die Rahmenbauteile eingehängt werden. Der vorgenannte Anwendungsfall ist aber nur als ein Beispiel anzusehen. Die vorliegende Erfindung kann ganz allgemein im Möbelbau zur Anwendung kommen oder auch in anderen Bereichen, in denen ähnliche Rahmenbauteile benötigt werden. Beispielsweise kann man diese Rahmenbauteile auch in Schubladenschränken einsetzen.

Die bislang nach dem Stand der Technik verwendeten Rahmenbauteile umfassen meist recht aufwendig herzustellende gestanzte oder gekantete Blechteile. Dabei werden außerdem für Rahmenbauteile mit jeweils unterschiedlichen Abmessungen jeweils gesonderte Blechteile in den gewünschten Maßen hergestellt, so daß die Fertigung sehr aufwendig ist.

Es ist daher eine Aufgabe der vorliegenden Erfindung, eine Anordnung zur Herstellung solcher Rahmenbauteile zur Verfügung zu stellen, die zu einer Vereinfachung in der Fertigung und der Montage führt, wobei zudem der Einsatzbereich der so hergestellten Rahmenbauteile vielseitiger ist als bisher.

Die Lösung dieser Aufgabe liefert eine erfindungsgemäße Anordnung zur Herstellung eines Rahmenbauteils der eingangs genannten Gattung mit den kennzeichnenden Merkmalen des Hauptanspruchs.

Weiterhin ist Gegenstand der Erfindung ein Möbelbauteil, welches wenigstens ein Rahmenbauteil umfaßt, welches unter Verwendung einer solchen Anordnung hergestellt wurde. Ein solches Möbelbauteil ist Gegenstand des Anspruchs 12. Die Unteransprüche 2 bis 11 betreffen bevorzugte Weiterbildungen der erfindungsgemäßen Aufgabenlösung, das heißt bevorzugte Varianten einer solchen Anordnung zur Herstellung eines Rahmenbauteils. Die Unteransprüche 13 bis 15 betreffen bevorzugte besonders vorteilhafte Möbelbauteile, die aus den genannten Rahmenbauteilen herstellbar sind.

Ein erfindungsgemäßes Rahmenbauteil umfaßt wenigstens ein Profilstück sowie stangenartige Bauelemente wobei das wenigstens eine Profilstück in wenigstens einer Aufnahme wenigstens ein stangenartiges Bauelement formschlüssig aufnimmt und Befestigungselemente vorgesehen sind, mittels derer eine Klemmkraft auf das stangenförmige Bauelement in der Aufnahme des Profilstücks quer zur Achse des stangenförmigen Bauelements erzielbar ist, derart, daß das stangenartige Bauelement im Befestigungszustand in der Aufnahme in Achsrichtung unverschieblich gehalten ist.

Das wenigstens eine stangenartige Bauelement kann beispielsweise einen etwa runden Querschnitt haben. Ebensogut kommen aber auch andere zum Beispiel rechteckige oder vieleckige Querschnitte in Betracht.

Je nach Anwendungsfall kann ein Profilstück im Rahmen der Erfindung ein oder mehrere stangenartige Bauelemente entweder übereinander oder nebeneinander aufnehmen, wobei jeweils für jedes stangenartige Bauelement eine entsprechende Aufnahme in dem Profilstück vorhanden ist.

Die Anpassung des Rahmenbauteils an verschiedene Abmessungen ist in besonders einfacher Weise dann möglich, wenn wenigstens ein stangenartiges Bauelement in Achsrichtung (Längsrichtung) aus der Aufnahme des dieses aufnehmenden Profilstücks herausragt. Das stangenartige Bauelement wird ja in der Aufnahme des Profilstücks formschlüssig gehalten und durch das Befestigungselement dort festgeklemmt, so daß es in Längsrichtung unverschiebbar ist. Das stangenartige Bauelement kann man daher um einiges länger ausbilden als das Profilstück oder aber man zieht ein oder mehrere stangenartige Bauelemente zur Verlängerung in einer Richtung aus dem Profilstück heraus, da es ausreicht, wenn das stangenartige Bauelement nur über einen Teil seiner Länge in der Aufnahme des Profilstücks gehalten ist. Auf diese Weise können aus gleichartigen stangenartigen Bauelementen und Profilstücken Rahmenbauteile mit verschiedenen Abmessungen hergestellt werden. Bei gelöstem Befestigungselement sind die stangenförmigen Bauelemente in den Profilstücken in Achsrichtung verschiebbar. Als Befestigungselemente kommen Muttern oder Schrauben, beispielsweise Flanschmuttern, bevorzugt in Betracht, so daß das Verschieben der stangenartigen Bauelemente in den Profilstücken nach Lösen der Muttern oder Schrauben denkbar einfach ist. Bei den bisher bekannten Rahmenbauteilen dieser Art sind Schweißverbindungen, Lötverbindungen oder Klebstellen oder auch Nieten notwendig, die bei der erfindungsgemäßen Lösung entfallen können. Die erfindungsgemäß gewählte Fügeverbindung benötigt lediglich die genannten Befestigungselemente, die beispielsweise ein Gewinde aufweisen können, welches in ein entsprechendes Gewinde (Innengewinde) des Profilstücks eingreift. Die Profilstücke sind aus einem geeigneten Material zu wählen, daß eine ausreichende Elastizität gegeben ist, so daß bei gelösten Befestigungselementen die stangenartigen Bauelemente noch in den Aufnahmen der Profilstücke verschiebbar ist, aber durch Anziehen der Befestigungselemente eine ausreichende Klemmkraft erzielt wird, die die stangenartigen Bauelemente in ihren Aufnahmen festklemmt.

Durch die erfindungsgemäße Anordnung lassen sich beispielsweise etwa rechteckig im Grundriß gestaltete Rahmenbauteile herstellen, indem man mehrere Profilstücke der eingangs genannten Art in zueinander rechtwinkliger Anordnung entsprechend dem Grundriß anordnet und dann die stangenartigen Bauelemente entsprechend in die Aufnahmen dieser Profilstücke einschiebt. Dabei kann man stangenartige Bauelemente mit in den Eckbereichen des Rahmenbauteils entsprechend vorzugsweise etwa rechtwinklig gebogenen Abschnitten verwenden, so daß man beispielsweise aus insgesamt vier Profilstücken und vier rechtwinklig gebogenen stangenartigen Bauelementen ein im Grundriß rechteckiges Rahmenbauteil der einfachsten Form herstellen kann.

Eine Weiterbildung der Erfindung sieht vor, daß das Profilstück unterhalb oder oberhalb der Aufnahme für die stangenartigen Bauelemente wenigstens einen flachen Verlängerungsschenkel aufweist. Dieser kann so geformt sein, daß er als Schiene für einen Schubladenauszug dient. Auf diese Art erhält man ein Rahmenbauteil, das beispielsweise für eine ausziehbare Schubladeneinheit, ein Tablar oder ein Relingsystem geeignet ist.

Nach dem gleichen Prinzip sind selbstverständlich komplexere Rahmenbauteile herstellbar, bei denen zwischen einem äußeren Rahmen ein oder mehrere Streben in Quer- oder Längsrichtung verlaufen, die wiederum aus den erfindungsgemäßen Profilstücken und den in deren Aufnahmen aufgenommenen stangenartigen Bauelementen bestehen. Beispielsweise kann man solche Rahmenbauteile verwenden, um in diese diverse Behältnisse einzuhängen, zum Beispiel für ein Abfalltrennsystem, welches wiederum in einem Küchenmöbel oder dergleichen eingebaut werden kann. In der Regel sind solche Abfalltrennsysteme ebenfalls über schubladenartige Auszüge nach vorn hin ausziehbar, um die Behälter im Gebrauchsfall zugänglich zu machen und im Nicht-Gebrauchsfall platzsparend in einem Küchenmöbel unterzubringen.

Die erfindungsgemäße Anordnung hat noch den weiteren Vorteil, daß nach Lösen der Befestigungselemente die stangenartigen Bauelemente in den Aufnahmen der Profilstücke um ihre Achse drehbar sind. Dadurch kann man weitere Teile an den Profilstücken befestigen, beispielsweise Blenden oder dergleichen, und kann durch Drehbewegung einen Ausgleich im Neigungswinkel schaffen.

Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
- Fig. 1: einen Vertikalschnitt durch ein Profilstück gemäß einer ersten Variante der Erfindung;
- Fig. 2: einen entsprechenden Schnitt durch ein Profilstück gemäß einer Variante der Erfindung mit einem Schubladenauszug;
- Fig. 3: einen Vertikalschnitt durch ein Profilstück gemäß einer weiteren Variante der Erfindung;
- Fig. 4: einen Vertikalschnitt durch ein Profilstück gemäß einer weiteren Variante der Erfindung;
- Fig. 5: eine Draufsicht auf ein beispielhaftes Rahmenbauteil gemäß der Erfindung;
- Fig. 6: eine Vorderansicht eines beispielhaften Möbelbauteils gemäß der Erfindung;
- Fig. 7: eine Vorderansicht eines beispielhaften Möbelbauteils gemäß einer weiteren Variante der Erfindung;
- Fig. 8: eine vertikale Schnittansicht entlang der Linie VIII-VIII von Fig. 7.

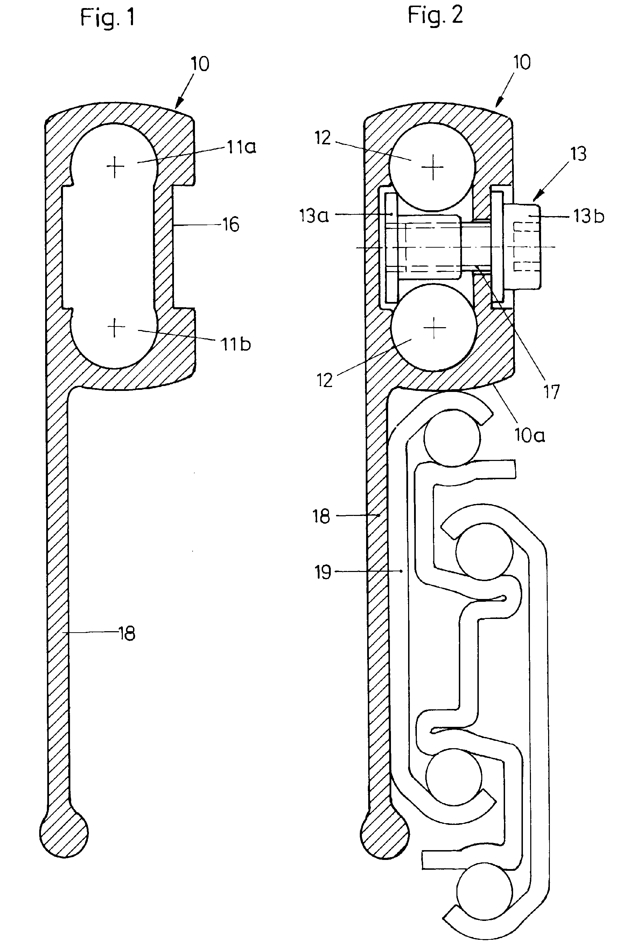

Zunächst wird auf Fig. 1 Bezug genommen. Die Darstellung zeigt ein beispielhaftes Profilstück, das im Rahmen einer erfindungsgemäßen Anordnung verwendet wird. Das Profilstück ist insgesamt mit 10 bezeichnet und im Vertikalschnitt dargestellt. Das Profilstück 10 hat einen oberen geschlossenen Teil mit einer oberen Aufnahme 11a und einer unteren Aufnahme 11b, in die jeweils stangenartige Bauelemente (nicht dargestellt) einschiebbar sind, die in diesen Aufnahmen 11 formschlüssig aufgenommen werden. Dies ist in Fig. 2 dargestellt. Das Profilstück 10 hat weiterhin einen sich über den geschlossenen oberen Teil an einer Seite nach unten hin hinaus erstreckenden flachen Verlängerungsschenkel 18, dessen Funktion nachfolgend noch unter Bezugnahme auf Fig. 2 erläutert werden wird. Das Profilstück 10 hat außerdem außen eine Widerlagerfläche 16 für ein Befestigungselement. Das Profilstück 10 ist aus einem starren Material gebildet, beispielsweise Aluminium oder auch aus einem geeigneten Kunststoff, wobei eine gewisse Nachgiebigkeit des Materials vorhanden sein muß, um auf die in die Aufnahmen 11 einzuschiebenden stangenartigen Bauelemente 12, die in Fig. 2 dargestellt sind, eine Klemmkraft ausüben zu können.

Fig. 2 zeigt die jeweils in die Aufnahmen 11 eingeschobenen stangenartigen Bauelemente 12 sowie das Befestigungselement 13, das quer zur Längsachse der stangenartigen Bauelemente 12 durch das Profilstück 10 greift. Das Befestigungselement 13 ist zum Beispiel eine Flanschmutter und hat einen Flanschteil 13a, der wie man sieht in einem Teil des Innenraums des Profilstücks 10 aufgenommen wird, der jenseits der beiden stangenartigen Bauelemente 12 liegt. Das Befestigungselement 13 hat weiterhin einen Kopf 13b, der im Befestigungszustand außen an einer Widerlagerfläche 16 des Profilstücks 10 anliegt (siehe auch Fig. 1). Das Befestigungselement 13 weist außerdem ein Gewinde 17 auf, welches vorzugsweise in ein Innengewinde des Profilstücks 10 eingreift.

Da das als Flanschmutter ausgebildete Befestigungselement 13 einerseits den Flanschteil 13a aufweist und andererseits den Kopf 13b der beim Anziehen des Befestigungselements auf die Widerlagerfläche 16 drückt, wird durch das Anziehen des Befestigungselements 13 das Profilstück 10 in Querrichtung etwas zusammengepreßt, wodurch die beiden stangenartigen Bauelemente 12 in ihren jeweiligen Aufnahmen 11a, 11b in dem Profilstück 10 festgeklemmt werden, so daß sie danach nicht mehr in Achsrichtung gegenüber dem Profilstück 10 verschiebbar sind.

In Fig. 2 erkennt man weiterhin die Funktion des sich nach unten hin anschließenden flachen Verlängerungsschenkels 18. Dieser bildet nämlich eine Anlageebene für einen Schubladenauszug 19, der in dem Raum unterhalb des breiter als der Verlängerungsschenkel 18 ausgebildeten Oberteils 10a untergebracht werden kann. Dieser Schubladenauszug 19 kann beispielsweise, was hier nicht dargestellt ist, an dem Verlängerungsschenkel 18 des Profilstücks 10 befestigt werden.

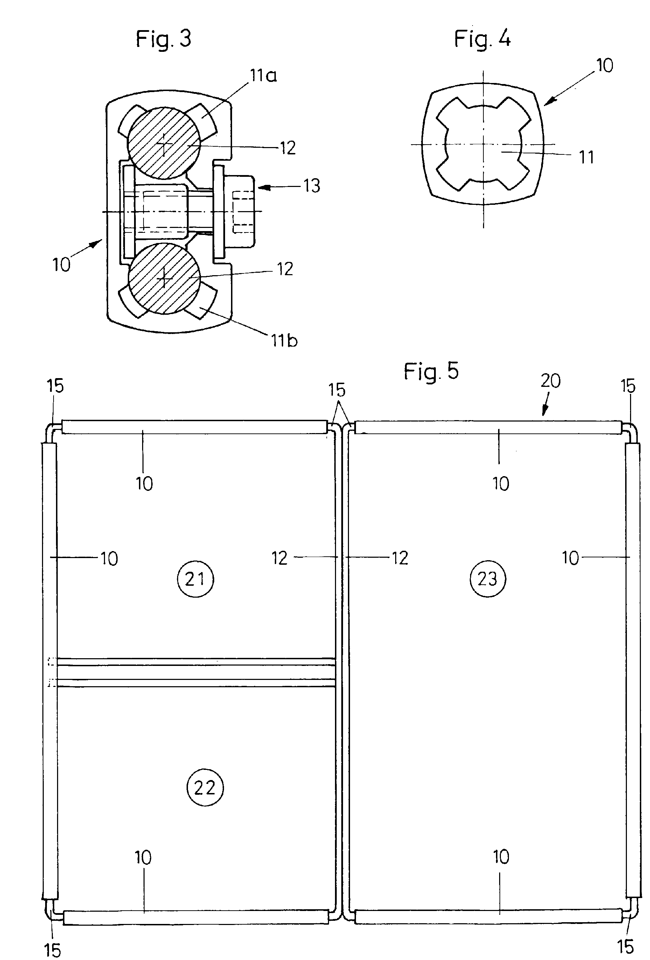

Fig. 3 zeigt ein anderes Profilstück 10 gemäß einer Variante der Erfindung. In diesem Fall sind ebenfalls zwei Aufnahmen 11a, 11b für jeweils ein stangenartiges Bauelement 12 vorgesehen, die wiederum übereinander liegen, die jedoch hier eine etwas andere Querschnittsform haben. Dennoch sind Anlageflächen in den Aufnahmen 11a, 11b gebildet, die über einen Teilumfang an dem stangenartigen Bauelement 12 jeweils anliegen, so daß sich ein Formschluß ergibt und sich die stangenartigen Bauelemente 12 bei Anziehen des Befestigungselements 13 festklemmen lassen. Bei dieser Variante des Profilstücks 10 gemäß Fig. 3 fehlt jedoch der untere flache Verlängerungsschenkel 18, da dieses Profilstück 10 nicht für die Aufnahme eines Schubladenauszugs bestimmt ist.

Fig. 4 zeigt eine noch einfachere alternative Variante eines erfindungsgemäßen Profilstücks 10. In diesem Fall hat das Profilstück 10 nur eine Aufnahme 11, so daß dieses nur ein stangenartiges Bauelement 12 aufnehmen kann, das jedoch im Prinzip in analoger Weise wie zuvor beschrieben in dem Profilstück 10 festgeklemmt werden kann.

In Fig. 5 ist in der Draufsicht ein beispielhaftes Rahmenbauteil 20 dargestellt, welches aus den Profilstücken 10 und den stangenartigen Bauelementen 12 wie sie zuvor beschrieben wurden hergestellt werden kann. Dieses beispielhaft dargestellte Rahmenbauteil 20 gemäß Fig. 5 eignet sich zum Beispiel dazu, mehrere Behältnisse für die Abfalltrennung (nicht dargestellt) aufzunehmen, die von oben her in dieses Rahmenbauteil 20 eingehängt werden können. Wie man in der Zeichnung sieht hat das Rahmenbauteil 20 im Prinzip drei Unterrahmen 21, 22 und 23, die das Rahmenbauteil 20 in drei Felder aufteilen, von denen die beiden Felder 21, 22 jeweils gleich groß sind und in der Tiefe des Rahmenbauteils (Ausziehrichtung), hintereinander liegen, während das dritte Feld, das dem dritten Unterrahmen 23 entspricht neben den beiden anderen Unterrahmen 21, 22 liegt.

Man erkennt weiterhin in Fig. 5, daß für die Herstellung des Rahmenbauteils 20 verschiedene Profilstücke 10 der zuvor beschriebenen Art verwendet werden. Diese Profilstücke 10 nehmen verschiedene stangenartige Bauelemente 12 auf, wobei es genügt, wenn die Profilstücke 10 die stangenartigen Bauelemente 12 nur über einen Teil deren Länge aufnehmen, so daß diese von den Profilstücken 10 gehalten werden. Man erkennt weiterhin, daß in den Eckbereichen beispielsweise des Unterrahmens 21 die stangenartigen Bauelemente 15 rechtwinklig gebogene Abschnitte aufweisen entsprechend dem Grundriß des Rahmenbauteils 20. Diese gebogenen Abschnitte 15 der stangenartigen Bauelemente liegen frei, während in der Längsrichtung und in der Querrichtung dann das stangenartige Bauelement 12, 15 zumindest an den Außenseiten der jeweiligen Unterrahmen 21, 22, 23 jeweils von Profilstücken 10 eingefaßt ist. Die stangenartigen Bauelemente 12, 15 werden in den Profilstücken 10 durch die Befestigungselemente 13 gehalten wie sie in den Figuren 2 und 3 dargestellt sind, wobei diese Befestigungselemente 13 aus Gründen der Übersichtlichkeit in Fig. 5 nicht dargestellt sind.

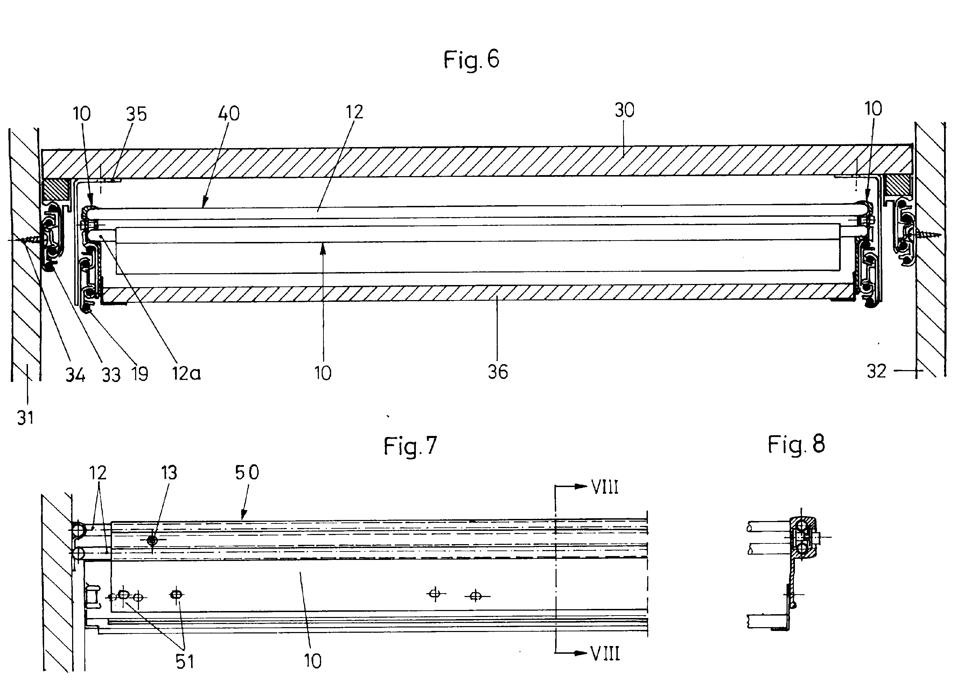

Fig. 6 zeigt nun beispielhaft eine Vorderansicht einer erfindungsgemäßen Anordnung als Teil eines Möbelbauteils, wobei Teile der Anordnung vertikal geschnitten sind. Bei dem Möbelbauteil gemäß diesem Ausführungsbeispiel kann es sich zum Beispiel um einen Teil eines Küchenunterschranks oder dergleichen handeln. Die Darstellung gemäß Fig. 6 zeigt eine obere Möbelplatte 30, die horizontal verläuft sowie an beiden Seiten vertikale Schrankseitenwände 31, 32. Äußere Schubladenauszüge 33 sind mittels Schrauben 34 in den Schrankseitenwänden 31, 32 befestigt. Unterseitig sind an der Möbelplatte 30 Winkelelemente 35 befestigt, mit denen wiederum ein erfindungsgemäßes Rahmenbauteil 40 verbunden ist. Dieses Rahmenbauteil 40 ist wiederum aus dem Möbelbauteil nach vorn hin ausziehbar über die Schubladenauszüge 19. Man erkennt weiterhin in der Tiefe des Möbelbauteils verlaufende Profilstücke 10 sowie stangenartige Bauelemente 12 gemäß der Erfindung an beiden Seiten. Die stangenartigen Bauelemente 12 sind über Eck geführt und setzen sich fort, so daß sie sich auch über die Querseite des Möbelbauteils erstrecken, auf die man in Fig. 6 schaut. Das untere Bauelement 12a in Fig. 6 ist wiederum in die Aufnahme eines Profilstücks 10 aufgeschoben, welches vorn in Querrichtung verläuft. Das Profilstück 10 kann um die Achse des stangenartigen Bauelements 12 schwenkbar sein, bevor die Befestigungselemente (nicht dargestellt) angezogen werden, so daß man die Neigungsstellung des Profilstücks 10 zur Vertikalen verändern kann. In Fig. 6 erkennt man außerdem, daß sich unterhalb des Profistücks 10 eine weitere nach vorn hin über die Auszüge 19 ausziehbare Platte 36 befindet, die zum Beispiel eine Ablageplatte oder ein Tablar bildet.

Die erfindungsgemäßen Rahmenbauteile sind sehr vielseitig verwendbar und eignen sich zur Konstruktion von Möbelbauteilen der verschiedensten Varianten. Fig. 7 zeigt ein weiteres Ausführungsbeispiel. Dort ist ein Teil eines Möbelbauteils schematisch vereinfacht dargestellt, umfassend ein Rahmenbauteil 50 gemäß einer Variante der Erfindung. Auch hier werden die Profilstücke 10 verwendet, die die stangenartigen Bauelemente 12 in ihren Aufnahmen aufnehmen, wobei hier eine etwas andere Ausführungsvariante des Profilstücks 10 zur Anwendung kommt als in Fig. 6, da in Fig. 7 das Profilstück 10 zwei Aufnahmen für übereinander liegende stangenartige Bauelemente 12 hat während in Fig. 6 das Profilstück 10 nur eine Aufnahme für ein stangenartiges Bauelement 12 hat, während das obere stangenartige Bauelement 12 in Fig. 6 freiliegt. In Fig. 7 sind an dem Profilstück 10 diverse Befestigungslöcher 51 eingezeichnet, so daß man an dem Profilstück weitere Möbelbauelemente anbringen kann. Fig. 8 zeigt einen vertikalen Schnitt durch das Profilstück 10 entlang der Linie VIII-VIII von Fig. 7.

## Patentansprüche

1. Anordnung zur Herstellung eines Rahmenbauteils, insbesondere zur Verwendung im Möbelbau, umfassend wenigstens ein Profilstück sowie stangenartige Bauelemente,
dadurch gekennzeichnet, daß das wenigstens eine Profilstück (10) in wenigstens einer Aufnahme (11) wenigstens ein stangenartiges Bauelement (12) formschlüssig aufnimmt und Befestigungselemente (13) vorgesehen sind, mittels derer eine Klemmkraft auf das stangenartige Bauelement (12) in der Aufnahme (11) des Profilstücks (10) quer zur Achse des stangenartigen Bauelements (12) erzielbar ist, derart, daß das stangenartige Bauelement (12) im Befestigungszustand in der Aufnahme (11) in Achsrichtung unverschieblich gehalten ist.

2. Anordnung zur Herstellung eines Rahmenbauteils nach Anspruch 1, dadurch gekennzeichnet, daß das wenigstens eine stangenartige Bauelement (12) einen etwa runden Querschnitt aufweist.

3. Anordnung zur Herstellung eines Rahmenbauteils nach Anspruch 1 oder 2, dadurch gekennzeichnet, daß ein Profilstück (10) mehrere stangenartige Bauelemente (12) übereinander oder nebeneinander aufnimmt in entsprechenden Aufnahmen (11a, 11b)

4. Anordnung zur Herstellung eines Rahmenbauteils nach einem der Ansprüche 1 bis 3, dadurch gekennzeichnet, daß wenigstens ein stangenartiges Bauelement (12) in Achsrichtung (Längsrichtung) aus der Aufnahme (11) des dieses aufnehmenden Profilstücks (10) herausragt.

5. Anordnung zur Herstellung eines Rahmenbauteils nach einem der Ansprüche 1 bis 4, dadurch gekennzeichnet, daß mehrere Profilstücke (10) zur Bildung eines Rahmenbauteils (14) in zueinander rechtwinkliger Anordnung angeordnet sind und die stangenartigen Bauelemente (15) außerhalb der Aufnahmen (11) in den Eckbereichen entsprechend vorzugsweise rechtwinklig gebogene Abschnitte aufweisen.

6. Anordnung zur Herstellung eines Rahmenbauteils nach einem der Ansprüche 1 bis 5, dadurch gekennzeichnet, daß als Befestigungselement (13) Muttern, vorzugsweise Flanschmuttern, vorgesehen sind.

7. Anordnung zur Herstellung eines Rahmenbauteils nach einem der Ansprüche 1 bis 6, dadurch gekennzeichnet, daß die Befestigungselemente (13), vorzugsweise Flanschmuttern einen Flanschteil (13a) aufweisen, der in einem Teil der Aufnahme (11) jenseits der stangenförmigen Bauelemente (12) aufgenommen ist.

8. Anordnung zur Herstellung eines Rahmenbauteils nach einem der Ansprüche 1 bis 7, dadurch gekennzeichnet, daß die Befestigungselemente, vorzugsweise Flanschmuttern (13) einen Kopf (13b) aufweisen, der im Befestigungszustand außen an einer Widerlagerfläche (16) des Profilstücks (10) anliegt.

9. Anordnung zur Herstellung eines Rahmenbauteils nach einem der Ansprüche 1 bis 8, dadurch gekennzeichnet, daß ein Gewinde (17) des Befestigungselements (13) in ein Innengewinde des Profilstücks (10) eingreift.

10. Anordnung zur Herstellung eines Rahmenbauteils nach einem der Ansprüche 1 bis 9, dadurch gekennzeichnet, daß das Profilstück (10) unterhalb oder oberhalb der Aufnahmen (11) für die stangenartigen Bauelemente (12) wenigstens einen flachen Verlängerungsschenkel (18) aufweist.

11. Anordnung zur Herstellung eines Rahmenbauteils nach einem der Ansprüche 1 bis 10, dadurch gekennzeichnet, daß der Raum seitlich des Verlängerungsschenkels (18) des Profilstücks (10) einen Schubladenauszug (19) aufnimmt.

12. Möbelbauteil, dadurch gekennzeichnet, daß es eine Anordnung gemäß einem oder mehreren der Ansprüche 1 bis 10 umfaßt.

13. Möbelbauteil nach Anspruch 12, dadurch gekennzeichnet, daß es ein Rahmenbauteil mit einer Anordnung gemäß einem der Ansprüche 1 bis 11 umfaßt als Teil einer ausziehbaren Schubladeneinheit, eines Tablars oder eines Relingsystems.

14. Möbelbauteil gemäß einem der Ansprüche 12 oder 13, dadurch gekennzeichnet, daß es einen ausziehbaren Abfallsammler umfaßt.

15. Möbelbauteil nach einem der Ansprüche 12 bis 14, dadurch gekennzeichnet, daß es ein Rahmenbauteil (20) umfaßt, in das mehrere Behältnisse für die Abfalltrennung einhängbar sind.
